# EUROPÄISCHE PATENTSCHRIFT

(11) **EP 0 892 002 B1**
(45) Veröffentlichungstag und Bekanntmachung des Hinweises auf die Patenterteilung: **27.03.2002**
(21) Anmeldenummer: 98112340.9
(22) Anmeldetag: 03.07.1998
(51) Int. Cl.: C08G 65/10, C08G 65/26, B01J 27/26

(54) **Neue Zink/Metall-Hexacyanocobaltat-Katalysatoren für die Herstellung von Polyetherpolyolen**
New Zinc/Metal- Hexacyanocobaltate Catalysts for the Production of Polyetherpolyols
Nouveaux catalyseurs de zinc/métal pour la production de polyetherpolyols

(30) Priorität: 16.07.1997 DE 19730467
(43) Veröffentlichungstag der Anmeldung: 20.01.1999
(73) Patentinhaber: BAYER AG, 51368 Leverkusen (DE)
(72) Erfinder: Hofmann, Jörg, Dr., 47829 Krefeld (DE); Gupta, Pramod, Dr., 50181 Bedburg (DE); Pielartzik, Harald, Dr., 47800 Krefeld (DE); Ooms, Pieter, Dr., 47800 Krefeld (DE); Schäfer, Walter, Dr., 42799 Leichlingen (DE)

(56) Entgegenhaltungen:
- EP-A- 0 090 444
- EP-A- 0 090 445
- EP-A- 0 283 148
- US-A- 3 829 505

## Beschreibung

Die Erfindung betrifft neue Zink/Metall-Hexacyanocobaltat-Katalysatoren, ein Verfahren zu deren Herstellung sowie deren Verwendung für die Herstellung von Polyetherpolyolen.

Doppelmetallcyanid (DMC)(DMC)-Komplexverbindungen als Katalysatoren für die Polyaddition von Alkylenoxiden an aktive Wasserstoffatome aufweisende Starterverbindungen sind bekannt (siehe beispielsweise US 3 404 109, US 3 829 505, US 3 941 849 und US 5 158 922). Der Einsatz dieser Doppelmetallcyanid-Komplexverbindungen als Katalysatoren für die Herstellung von Polyetherpolyolen bewirkt insbesondere eine Reduzierung des Anteils an monofunktionellen Polyethern mit endständigen Doppelbindungen, sogenannten Monoolen, im Vergleich zu der konventionellen Herstellung von Polyetherpolyolen mittels Alkali-Katalysatoren, wie Alkalihydroxiden.

Aus US 5 470 813 und JP 4 145 123 sind verbesserte Doppelmetallcyanid-Komplexverbindungen bekannt, die den Anteil an monofunktionellen Polyethern mit endständigen Doppelbindungen bei der Herstellung von Polyetherpolyolen weiter zu reduzieren vermögen. Darüber hinaus wird durch den Einsatz der verbesserten Doppelmetallcyanid-Komplexverbindungen die Induktionszeit bei der Polyadditionsreaktion der Alkylenoxide an entsprechende Starterverbindungen reduziert und die Katalysatoraktivität erhöht.

Aufgabe der vorliegenden Erfindung ist es nun, weiter verbesserte Doppelmetallcyanid (DMC)(DMC)-Komplexverbindungen als Katalysatoren für die Polyaddition von Alkylenoxiden an entsprechende Starterverbindungen zur Verfügung zu stellen, die eine im Hinblick auf die bislang bekannten Katalysatortypen beträchtlich reduzierte Induktionsperiode aufweisen. Eine Reduktion der Induktionsperiode führt durch Verkürzung der Cyclenzeiten der Polyetherpolyol-Herstellung zu einer verbesserten Wirtschaftlichkeit des Prozesses. Darüber hinaus war es Ziel der vorliegenden Erfindung, eine möglichst enge Molmassenverteilung bei den herzustellenden Polyetherpolyolen zu erreichen. Eine möglichst enge Molmassenverteilung der Polyole ist für die Verarbeitung zu hochwertigen Polyurethanen (z.B. Elastomeren) von großem Vorteil.

Gegenstand der vorliegenden Erfindung sind daher neue Zink/Metall-Hexacyanocobaltat-Katalysatoren der Formel

Zn₃₋ᵥ Mᵥ[Co(CN)₆]₂ · w(H₂O)·x(L) · y[Zn(X)ₙ] · z[M(Y)ₘ)] ,

wobei
- M bedeutet: ein zweiwertiges Metall ausgewählt aus der Gruppe Cadmium (II), Quecksilber (II), Palladium (II), Platin (II), Vanadium (II), Magnesium (II), Calcium (II), Barium (II), Eisen (II), Nickel (II), Mangan (II), Cobalt (II), Zinn (II), Blei (II), Strontium (II) und Kupfer (II),
- X und Y: gleich oder verschieden sind und stehen für ein Halogenid, für eine Hydroxy-, Sulfat-, Carbonat-, Cyanat-, Thiocyanat-, Isocyanat-, Isothiocyanat-, Carboxylat-, Oxalat- oder eine Nitratgruppe,
- L: einen organischen Komplexliganden darstellt, ausgewählt aus der Gruppe der Alkohole, Aldehyde, Ketone, Ether, Ester, Amide, Harnstoffe, Nitrile oder Sulfide,
- v: eine Zahl von 0,005 bis 2,995 bedeutet,
- w: für eine Zahl von 0,1 bis 10 steht,
- x: eine Zahl von 0,01 bis 10,
- y: eine Zahl von 0,001 bis 3,0 und
- Z: eine Zahl von 0,001 bis 3,0 bedeuten und
- m und n: gleich oder verschieden sind und für die Zahlen 1 oder 2 stehen.

Besonders bevorzugt sind Zink/Metall-Hexacyanocobaltate, in denen
- M: steht für Cadmium (II), Quecksilber (II), Palladium (II), Platin (II), Vanadium (II), Magnesium (II), Calcium (II) oder Barium (II),
- X und Y: stehen für Halogenide, insbesondere für Chlor oder Brom,
- L: steht für Alkohole, Ketone oder Ether und
- v: eine Zahl von 0,01 bis 2,99 bedeutet.

Als Liganden L mit Etherbindungen kommen insbesondere solche Verbindungen in Betracht, die zur Chelatbindung mit den Metallen befähigt sind. Beispielsweise kommen als Liganden in Betracht: Methanol, Ethanol, Propanol, Isopropanol, Butanol, Hexanol, Octanol, tert.-Butanol, Formaldehyd, Acetaldehyd, Propionaldehyd, Butyraldehyd, i-Butyraldehyd, Glyoxal, Benzaldehyd, Tolualdehyd, Aceton, Methylethylketon, 3-Pentanon, 2-Pentanon, 2-Hexanon, 2,4-Pentandion, 2,5-Hexandion, 2,4-Hexandion, m-Dioxan, p-Dioxan, Trioxymethylen, Paraldehyd, Diethylether, 1-Ethoxypentan, Bis(β-chlor-ethyl)ether, Bis(β-ethoxy-ethyl)ether, Dibutylether, Ethylpropylether, Bis(β-methoxy-ethyl)ether, Dimethoxyethan(Glyme), Diethylenglykoldimethylether (Diglyme), Triethylenglykoldimethylether, Dimethoxymethan, Methylpropylether, Polyalkylenoxidpolyole, Formamid, Acetamid, Propionamid, Butyramid, Valeramid, N,N'-Dimethylacetamid, Amylformiat, Ethylformiat, n-Hexylformiat, n-Propylformiat, Ethylethanoat, Methylacetat, Methylpropionat, Triethylenglykoldiacetat, Acetonitril, Propionitril, Butyronitril, Dimethylsulfid, Diethylsulfid, Dibutylsulfid, Dipropylsulfid, Diamylsulfid, 1,1,3,3-Tetramethylharnstoff und 1,1,3,3-Tetraethylharnstoff.

Bevorzugte Zink/Metall-Hexacyanocobaltat-Katalysatoren sind solche der allgemeinen Formel:

Zn₃₋ᵥ Mᵥ[Co(CN)₆]₂ · w(H₂O) · x(L) · y(ZnCl₂) · z(MCl₂)

wobei
- v: gleich 0,005 bis 2,995,
- w: gleich 0,1 bis 10,
- x: gleich 0,01 bis 10 und
- y und z: gleich 0,001 bis 3,0 sind.

Ein besonders bevorzugter Katalysator hat z.B. die Formel:

Zn₃₋ᵥ Cdᵥ[Co(CN)₆]₂ . w(H₂O) . x(tert.-Butanol) . _{y}(ZnCl₂) . z(CdCl₂)

mit den o.g. Werten für v, w, x, y und z.

Ein weiterer Gegenstand der vorliegenden Erfindung ist die Herstellung der zuvor beschriebenen Zink/Metall-Hexacyanocobaltat-Katalysatoren.

Diese Katalysatoren werden erhalten, indem man eine 1 bis 90 gew.-%ige, wäßrige Lösung eines Zinksalzes der Formel Zn(X)ₙ und eines Metallsalzes der Formel M(Y)ₘ mit einer 0,5 bis 50 gew.-%igen, wäßrigen Lösung eines Cobalt(III)-Cyanidsalzes der Formel

M'₃[Co(CN)₆]_{r'}

wobei
r = 1 oder 2 ist und
M' für Alkali- oder Erdalkalimetalle steht,
in Gegenwart von organischen Komplexliganden der Formel L umsetzt, wobei die Salze Zn(X)ₙ, M(Y)ₘ und das Cobalt(III)-Cyanidsalz in solchen Mengen eingesetzt werden, daß das molare Verhältnis von Zink und Metall M zu Cobalt 2:1 bis 10:1 beträgt, der Komplexligand L in solchen Mengen eingesetzt wird, daß das molare Verhältnis von Zink und Metall M zu L 1:100 bis 100:1 beträgt, und das molare Verhältnis von Zinksalz Zn(X)ₙ zu Metallsalz M(Y)ₘ im Bereich von 500:1 bis 1:500 liegt.

Als Alkali- oder Erdalkalimetalle M' kommen insbesondere in Frage: Natrium, Kalium, Lithium und Calcium, besonders bevorzugt Kalium.

Die Bedeutung von X, Y und L in den obigen Formeln ist bereits zuvor beschrieben worden.

Bevorzugt wird eine 5 bis 70 gew.-%ige Lösung der Zink- (Zn(X)ₙ) und Metallsalze (M(Y)ₘ) in die erfindungsgemäße Umsetzung eingesetzt. Die wäßrige Lösung der Cobalt(III)-Cyanidsalze wird bevorzugt in einer Konzentration von 1 bis 30 Gew.-% eingesetzt.

Das molare Verhältnis von Zink und Metall M zu Cobalt beträgt bevorzugt 2,25:1 bis 8:1. Der Komplexligand L wird bevorzugt in molaren Mengen von 1:50 bis 50:1, bezogen auf Zink und Metall M, eingesetzt. Das molare Verhältnis von Zinksalz zu Metallsalz liegt bevorzugt im Bereich von 300:1 bis 1:300.

Als Zinksalz Zn(X)ₙ wird bevorzugt eingesetzt:

Zinkchlorid, Zinkbromid, Zinkiodid, Zinkacetat, Zinkacetylacetonat, Zinkcarbonathydroxid, Zinkfluorid, Zinknitrat, Zinksulfat, Zinkbenzoat, Zinkcarbonat, Zinkcitrat, Zinkformiat, Zinkthiocyanat. Besonders bevorzugt sind Zinkchlorid und Zinkbromid. Es können auch Mischungen verschiedener Zinksalze eingesetzt werden.

Als Metallsalz M(Y)ₘ wird bevorzugt eingesetzt: Cadmiumchlorid, Quecksilberchlorid, Palladiumchlorid, Platinchlorid, Vanadiumchlorid, Calciumchlorid, Bariumchlorid, Bariumnitrat, Calciumbromid, Calciumformiat, Calciumiodid, Calciumoxalat, Calciumpropionat, Cadmiumacetat, Cadmiumbromid, Cadmiumiodid, Cadmiumsulfat, Palladiumacetat, Palladiumnitrat, Quecksilberacetat, Quecksilbernitrat, Magnesiumchlorid, Manganchlorid, Eisensulfat, Eisenacetat, Eisenbromid, Eisenchlorid, Eiseniodid, Eisennitrat, Eisenthiocyanat, Cobaltchlorid, Cobaltbromid, Cobaltacetat, Cobaltiodid, Cobaltnitrat, Cobaltsulfat, Nickelchlorid, Nickelbromid, Nickeliodid, Nickelnitrat, Nickelsulfat, Strontiumchlorid, Kupferchlorid oder Bleichlorid. Besonders bevorzugt sind die Metallhalogenide, insbesondere die Chloride und Bromide. Es können auch Mischungen verschiedener Metallsalze eingesetzt werden. Als Cobalt(III)-Cyanidsalze der Formel M'₃[Co(CN)₆]ᵣ werden bevorzugt eingesetzt: Lithiumhexacyanocobaltat (III), Natriumhexacyanocobaltat (III), Kaliumhexacyanocobaltat (III) oder Calciumhexacyanocobaltat (III). Besonders bevorzugt ist Kaliumhexacyanocobaltat (III).

Es können auch Mischungen verschiedener Cobalt(III)-Cyanidsalze eingesetzt werden.

Als Komplexliganden L werden bevorzugt die zuvor als besonders geeignet genannten Alkohole, Ketone und Ether in die erfindungsgemäße Umsetzung eingesetzt. Die Liganden können einzeln oder in Kombination eingesetzt werden.

Die Herstellung der erfindungsgemäßen Katalysatoren erfolgt durch Mischen der beiden wäßrigen Lösungen der zuvor genannten Metallsalze bei 10 bis 80°C, bevorzugt 20 bis 60°C. Hierbei kann entweder die wäßrige Lösung der zuvor genannten Zinksalze Zn(X)ₙ und der Metallsalze M(Y)ₘ zur wäßrigen Lösung der Cobalt(III)-Cyanidsalze zugegeben werden. Prinzipiell ist es auch möglich, die wäßrige Cobalt(III)-Cyanidsalz-Lösung zu der wäßrigen Lösung der Zink- und Metallsalze zuzugeben.

Bei dem erfindungsgemäßen Verfahren hat sich als besonders vorteilhaft erwiesen, wenn die beiden genannten wäßrigen Lösungen intensiv miteinander vermischt werden. Weiterhin kann es von Vorteil sein, daß man die wäßrige Cobalt(III)-Cyanidsalz-Lösung vor dem Mischen mit der kombinierten wäßrigen Zink-/Metallsalz-Lösung noch über eine Ionenaustauschersäule mit einem sauren Ionenaustauscher (H-Form) leitet.

Nach dem Vermischen der beiden wäßrigen Lösungen fällt der gemischte Zink/Metall-Hexacyanocobaltat-Katalysator aus. Der ausgefallene Katalysator wird anschließend mit einem oder mehreren der genannten Komplexliganden L behandelt.

Selbstverständlich ist es auch möglich, die organischen Liganden L den wäßrigen Lösungen der zuvor genannten Metallsalze zuzugeben oder die organischen Liganden der nach dem Mischen der wäßrigen Lösungen der Metallsalze erhaltenen Suspension zuzugeben.

Das erfindungsgemäße Verfahren zur Herstellung der neuen Zink/Metall-Hexacyanocobaltat-Katalysatoren ist im Prinzip bekannt und beispielsweise ausführlich in dem zuvor beschriebenen Stand der Technik beschrieben.

Zur Steigerung der Aktivität der erfindungsgemäßen Katalysatoren ist es vorteilhaft, den beispielsweise durch Filtration oder Zentrifugation erhaltenen Katalysator nochmals mit Wasser oder mit den zuvor genannten organischen Liganden gegebenenfalls in Gegenwart von Wasser zu behandeln. Auf diese Weise können zum Beispiel wasserlösliche Nebenprodukte, wie Kaliumchlorid, die die Polyadditionsreaktion negativ beeinflussen, aus dem erfindungsgemäßen Katalysator entfernt werden.

Der mit Wasser und/oder den entsprechenden organischen Liganden behandelte Katalysator wird anschließend, gegebenenfalls nach der Pulverisierung, bei Temperaturen von 20 bis 100°C und bei Drücken von 0,1 mbar bis Normaldruck (1013 mbar) getrocknet.

Ein weiterer Gegenstand ist die Verwendung des erfindungsgemäßen Zink/Metall-Hexacyanocobaltat-Katalysators zur Herstellung von Polyetherpolyolen durch Polyaddition von Alkylenoxiden an aktive Wasserstoffatome aufweisende Starterverbindungen. Als Alkylenoxide kommen bevorzugt Ethylenoxid, Propylenoxid, Butylenoxid sowie deren Mischungen zum Einsatz. Der Aufbau der Polyetherketten durch Alkoxylierung kann z.B. nur mit einem monomeren Epoxid durchgeführt werden oder aber auch statistisch oder blockweise mit 2 oder 3 unterschiedlichen monomeren Epoxiden erfolgen. Näheres ist "Ullmanns Encyclopädie der industriellen Chemie", englisch-sprachige Ausgabe, 1992, Band A21, Seiten 670 - 671, zu entnehmen.

Als aktive Wasserstoffatome aufweisende Starterverbindungen werden Verbindungen mit Molekulargewichten von 18 bis 2 000 und 1 bis 8 Hydroxylgruppen eingesetzt. Beispielsweise werden genannt: Ethylenglykol, Diethylglykol, 1,2-Propylenglykol, 1,4-Butandiol, Hexamethylenglykol, Bisphenol A, Trimethylolpropan, Glycerin, Pentaerythrit, Sorbit, Rohrzucker, abgebaute Stärke und Wasser.

Vorteilhafterweise werden solche aktive Wasserstoffatome aufweisende Starterverbindungen eingesetzt, die z.B. durch konventionelle Alkalikatalyse aus den zuvor genannten niedermolekularen Startern hergestellt wurden und oligomere Alkoxylierungsprodukte darstellen mit Molekulargewichten von 200 bis 2 000.

Die durch die erfindungsgemäßen Katalysatoren katalysierte Polyaddition von Alkylenoxiden an aktive Wasserstoffatome aufweisende Starterverbindungen erfolgt im allgemeinen bei Temperaturen von 20 bis 200°C, bevorzugt im Bereich von 40 bis 180°C, besonders bevorzugt bei Temperaturen von 50 bis 150°C. Die Reaktion kann bei Normaldruck oder bei Drücken von 0 bis 20 bar (absolut) durchgeführt werden. Die Polyaddition kann in Substanz oder einem inerten, organischen Lösungsmittel, wie Toluol und/oder THF, durchgeführt werden. Die Menge an Lösungsmittel beträgt üblicherweise 10 bis 30 Gew.-%, bezogen auf die Menge des herzustellenden Polyetherpolyols.

Die Katalysatorkonzentration wird so gewählt, daß unter den gegebenenen Reaktionsbedingungen eine gute Beherrschung der Polyadditionsreaktion möglich ist. Die Katalysatorkonzentration liegt im allgemeinen im Bereich von 0,0005 Gew.-% bis 1 Gew.-%, bevorzugt im Bereich von 0,001 Gew.-% bis 0,1 Gew.-%, bezogen auf die Menge des herzustellenden Polyetherpolyols.

Die Reaktionszeiten für die Polyaddition liegen im Bereich von wenigen Minuten bis zu mehreren Tagen, bevorzugt bei einigen Stunden.

Die Molekulargewichte der nach dem erfindungsgemäßen Verfahren hergestellten Polyetherpolyole liegen im Bereich von 500 bis 100 000 g/mol, bevorzugt im Bereich von 1 000 bis 50 000 g/mol, besonders bevorzugt im Bereich von 2 000 bis 20 000 g/mol.

Die Polyaddition kann kontinuierlich, in einem Batch- oder im Semibatchverfahren durchgeführt werden.

Die erfindungsgemäßen Katalysatoren benötigen im allgemeinen eine Induktionsperiode von einigen Minuten bis zu mehreren Stunden.

Mit Hilfe der neuen erfindungsgemäßen Katalysatoren wird die Induktionsperiode um etwa 30 % im Vergleich zu den bislang bekannten DMC-Katalysatoren verkürzt. Die Molekulargewichtsverteilung M_{w}/Mₙ der mit den erfindungsgemäßen Katalysatoren hergestellten Polyetherpolyole beträgt etwa 1,01 bis 1,07 und ist damit deutlich enger als die Molekulargewichtsverteilung der mit den bislang bekannten Katalysatoren hergestellten Polyetherpolyole (siehe Beispiele).

### Beispiele

### Katalysatorpräparation

### Vergleichsbeispiel 1

Herstellung von Zinkhexacyanocobaltat(III)-DMC-Katalysator mit tert.-Butanol als organischem Komplexliganden (Katalysator A, Synthese gemäß JP 4 145 123).

Eine Lösung von 10 g (73,3 mMol) Zinkchlorid in 15 ml destilliertem Wasser gibt man unter starkem Rühren zu einer Lösung von 4 g (12 mMol) Kaliumhexacyanocobaltat in 75 ml destilliertem Wasser. Unmittelbar danach wird eine Mischung aus 50 ml tert.-Butanol und 50 ml destilliertem Wasser langsam zur gebildeten Suspension gegeben und anschließend 10 min gerührt. Der Feststoff wird durch eine Filtration isoliert, dann 10 min mit 125 ml einer Mischung aus tert.-Butanol und destilliertem Wasser (70/30; v/v) gerührt und erneut filtriert. Abschließend wird noch einmal 10 min mit 125 ml tert.-Butanol gewaschen. Nach Filtration wird der Katalysator bei 50°C und Normaldruck bis zur Gewichtskonstanz getrocknet.
Ausbeute an getrocknetem, pulverförmigem Katalysator: 3,08 g
Elementaranalyse: Cobalt = 13,6 %; Zink = 27, 35 %.

### Beispiel 2

Herstellung von Zink/Cadmium-Hexacyanocobaltat(III)-Katalysator mit tert.-Butanol als organischem Komplexliganden und 0,9 % Cadmium (Katalysator B).

Zu 4 g (12 mMol) Kaliumhexacyanocobaltat in 75 ml destilliertem Wasser gibt man unter starkem Rühren eine Lösung von 9 g (66 mMol) Zinkchlorid und 1,34 g (7,3 mMol) Cadmiumchlorid in 15 ml destilliertem Wasser. Sofort danach wird eine Mischung aus 50 ml tert.-Butanol und 50 ml destilliertem Wasser langsam zur gebildeten Suspension gegeben und anschließend 10 min gerührt.

Der Feststoff wird durch Filtration isoliert, dann 10 min mit 125 ml einer Mischung aus tert.-Butanol und destilliertem Wasser (70/30; v/v) gerührt und erneut filtriert. Abschließend wird noch einmal 10 min mit 125 ml tert.-Butanol gewaschen. Nach Filtration wird der Katalysator bei 50°C und Normaldruck bis zur Gewichtskonstanz getrocknet.
Ausbeute an getrocknetem, pulverförmigem Katalysator: 2,83 g
Elementaranalyse: Cobalt = 11,8 %; Zink = 22,9 %; Cadmium = 0,9 %

### Beispiel 3

Herstellung von Zink/Cadmium-Hexacyanocobaltat(III)-Katalysator mit tert.-Butanol als organischem Komplexliganden und 7,1 % Cadmium (Katalysator C).

Wie Beispiel 2, jedoch mit:
Zugabe einer Lösung von 7 g (51,3 mMol) Zinkchlorid und 4,0 g (22 mMol) Cadmiumchlorid in 15 ml destilliertem Wasser.
Ausbeute an getrocknetem, pulverförmigem Katalysator: 3,32 g
Elementaranalyse: Cobalt = 16,5 %; Zink = 25,2 %; Cadmium = 7,1 %

### Herstellung von Polyetherpolyolen

### Allgemeine Durchführung:

In einem 500 ml Druckreaktor werden 50 g Polypropylenglykol-Starter (Molekulargewicht = 1 000 g/mol) und 20 mg Katalysator (100 ppm, bezogen auf die Menge des herzustellenden Polyols) unter Schutzgas (Argon) vorgelegt und unter Rühren auf 105°C aufgeheizt. Anschließend wird Propylenoxid (ca. 5 g) auf einmal zudosiert, bis der Druck auf 2,5 bar (absolut) angestiegen ist. Weiteres Propylenoxid wird erst dann wieder zudosiert, wenn ein beschleunigter Druckabfall im Reaktor beobachtet wird. Dieser beschleunigte Druckabfall zeigt an, daß der Katalysator aktiviert ist. Anschließend wird das restliche Propylenoxid (145 g) kontinuierlich bei einem konstanten Druck von 2,5 bar (absolut) zudosiert. Nach vollständiger Propylenoxid-Dosierung und 5 Stunden Nachreaktionszeit bei 105°C werden flüchtige Anteile bei 90°C (1 mbar) abdestilliert und anschließend auf Raumtemperatur abgekühlt.

Die erhaltenen Polyetherpolyole wurden durch Ermittlung der OH-Zahlen, der Doppelbindungsgehalte sowie der mittleren Molmassen und Molmassenverteilungen M_{w}/Mₙ ( MALDI-TOF-MS) charakterisiert.

Die Induktionsperioden wurden aus den Zeit-Umsatz-Kurven (Propylenoxid-Verbrauch [g] vs. Reaktionszeit [min]) aus dem Schnittpunkt der Tangente an den steilsten Punkt der Zeit-Umsatz-Kurve mit der verlängerten Basislinie der Kurve bestimmt.

### Vergleichsbeispiel 4

Herstellung von Polyetherpolyol mit Katalysator A (100 ppm)

| | | |
|---|---|---|
| Induktionsperiode | | 290 min |
| Polyetherpolyol | OH-Zahl (mg KOH/g) | 28,5 |
| | Doppelbindungsgehalt (mMol/kg) | 6 |
| | Mₙ | 3426 |
| | M_{w}/Mₙ | 1,12 |

### Beispiel 5

Herstellung von Polyetherpolyol mit Katalysator B (100 ppm)

| | | |
|---|---|---|
| Induktionsperiode | | 240 min |
| Polyetherpolyol | OH-Zahl (mg KOH/g) | 28,0 |
| | Doppelbindungsgehalt (mMol/kg) | 7 |
| | Mₙ | 3426 |
| | M_{w}/Mₙ | 1,03 |

### Beispiel 6

Herstellung von Polyetherpolyol mit Katalysator C (100 ppm)

| | | |
|---|---|---|
| Induktionsperiode | | 195 min |
| Polyetherpolyol | OH-Zahl (mg KOH/g) | 29,3 |
| | Doppelbindungsgehalt (mMol/kg) | 8 |
| | Mₙ | 3324 |
| | M_{w}/Mₙ | 1,06 |

Ein Vergleich zwischen den Beispielen 5,6 und dem Vergleichsbeispiel 4 macht deutlich, daß bei der Herstellung von Polyetherpolyolen mit den erfindungsgemäßen Zink/Metall-Hexacyanocobaltat(III)-Katalysatoren im Vergleich zur Katalyse mit Zinkhexacyanocobaltat(III)-DMC-Katalysatoren deutlich reduzierte Induktionsperioden auftreten und daß die Molmassenverteilung der auf erfindungsgemäße Weise hergestellten Polyetherpolyole wesentlich enger ist als bei den entsprechenden durch Zinkhexacyanocobaltat(III)-DMC-Katalyse hergestellten Polyolen.

## Patentansprüche

1. Zink/Metall-Hexacyanocobaltat-Katalysator der Formel
Zn₃₋ᵥ Mᵥ [Co(CN)₆]₂ · w(H₂O) · x(L) · y[Zn(X)ₙ] · z[M(Y)ₘ)],
wobei
M bedeutet ein zweiwertiges Metall ausgewählt aus der Gruppe Cadmium (II), Quecksilber (II), Palladium (II), Platin (II), Vanadium (II), Magnesium (II), Calcium (II), Barium (II), Eisen (II), Nickel (II), Mangan (II), Cobalt (II), Zinn (II), Blei (II), Strontium (II) und Kupfer (II),
X und Y gleich oder verschieden sind und stehen für ein Halogenid, für eine Hydroxy-, Sulfat-, Carbonat-, Cyanat-, Thiocyanat-, Isocyanat-, Isothiocyanat-, Carboxylat-, Oxalat- oder eine Nitratgruppe,
L einen organischen Komplexliganden darstellt, ausgewählt aus der Gruppe der Alkohole, Aldehyde, Ketone, Ether, Ester, Amide, Harnstoffe, Nitrile oder Sulfide,
v eine Zahl von 0,005 bis 2,995 bedeutet,
w für eine Zahl von 0,1 bis 10 steht,
x eine Zahl von 0,01 bis 10,
y eine Zahl von 0,001 bis 3,0 und
z eine Zahl von 0,001 bis 3,0 bedeuten und
m und n gleich oder verschieden sind und für die Zahlen 1 oder 2 stehen.

2. Verfahren zur Herstellung der Zink/Metall-Hexacyanocobaltat-Katalysatoren gemäß Anspruch 1, **dadurch gekennzeichnet, daß** man eine 1 bis 90 gew.-%ige wäßrige Lösung eines Zinksalzes der Formel Zn(X)ₙ und eines Metallsalzes der Formel M(Y)ₘ mit einer 0,5 bis 50 gew.-%igen wäßrigen Lösung eines Cobalt(III)-Cyanidsalzes der Formel
M'₃[Co(CN)₆]ᵣ,
wobei
r = 1 oder 2 ist und
M' für Alkali- oder Erdalkalimetalle steht,
in Gegenwart von organischen Komplexliganden der Formel L umsetzt, wobei die Salze Zn(X)ₙ, M(Y)ₘ und das Cobalt(III)-Cyanidsalz in solchen Mengen eingesetzt werden, daß das molare Verhältnis von Zink und Metall M zu Cobalt (III) 2:1 bis 10:1 beträgt, der Komplexligand L in solchen Mengen eingesetzt wird, daß das molare Verhältnis von Zink und Metall M zu L 1:100 bis 100:1 beträgt, und das molare Verhältnis von Zinksalz Zn(X)ₙ zu Metallsalz M(Y)ₘ im Bereich von 500:1 bis 1:500 liegt.

3. Verwendung der Zink/Metall-Hexacyanocobaltat-Katalysatoren nach Anspruch 1 zur Herstellung von Polyetherpolyolen.

## Claims

1. Zinc/metal hexacyanocobaltate catalyst of the formula
Zn₃₋ᵥ Mᵥ[Co(CN)₆]₂ · w(H₂O) · x(L) · y[Zn(X)ₙ] · z[M(Y)ₘ)],
wherein
M denotes a divalent metal selected from the group comprising cadmium (II), mercury (II), palladium (II), platinum (II), vanadium (II), magnesium (II), calcium (II), barium (II), iron (II), nickel (II), manganese (II), cobalt (II), tin (II), lead (II), strontium (II) and copper (II),
X and Y are the same or different and denote a halide, or a hydroxy, sulfate, carbonate, cyanate, thiocyanate, isocyanate, isothiocyanate, carboxylate, oxalate or a nitrate group,
L denotes an organic complex ligand selected from the group comprising alcohols, aldehydes, ketones, ethers, esters, amides, ureas, nitriles or sulfides,
v denotes a number from 0.005 to 2.995,
w denotes a number from 0.1 to 10,
x denotes a number from 0.01 to 10,
y denotes a number from 0.001 to 3.0, and
Z denotes a number from 0.001 to 3.0, and
m and n are the same or different and denote the numbers 1 or 2.

2. Process for producing the zinc/metal hexacyanocobaltate catalysts according to claim 1, **characterised in that** a 1 to 90 wt.% aqueous solution of a zinc salt of the formula Zn(X)ₙ and of a metal salt of the formula M(Y)ₘ is reacted with a 0.5 to 50 wt.% aqueous solution of a cobalt(III) cyanide salt of the formula
M'₃[Co(CN)₆]ᵣ,
wherein
r = 1 or 2 and
M' denotes alkaline metals or alkaline earth metals,
in the presence of organic complex ligands of the formula L, the salts Zn(X)ₙ, M(Y)ₘ and the cobalt(III) cyanide salt being used in such amounts that the molar ratio of zinc and metal M to cobalt(III) is 2:1 to 10:1, the complex ligand L being used in such amounts that the molar ratio of zinc and metal M to L is 1:100 to 100:1, and the molar ratio of zinc salt Zn(X)ₙ to metal salt M(Y)ₘ being in the range from 500:1 to 1:500.

3. Use of the zinc/metal hexacyanocobaltate catalysts according to claim 1 to produce polyether polyols.

## Revendications

1. Catalyseurs hexacyanocobaltate de zinc/métal, de formule :
Zn₃₋ᵥMᵥ[Co(CN)₆]₂ . w(H₂O) . x(L) . y[Zn(X)ₙ] . z[M(Y)ₘ]
où :
M représente un métal bivalent choisi parmi le groupe composé du cadmium (II), du mercure (II), du palladium (II), du platine (II), du vanadium (II), du magnésium (II), du calcium (II), du baryum (II), du fer (II), du nickel (II), du manganèse (II), du cobalt (II), de l'étain (II), du plomb (II), du strontium (II) et du cuivre (II) ;
X et Y sont identiques ou différents et représentent un halogénure, un radical hydroxy, sulfate, carbonate, cyanate, thiocyanate, isocyanate, isothiocyante, carboxylate, oxalate ou nitrate ;
L représente un ligand-complexe organique, choisi parmi le groupe composé des alcools, des aldéhydes, des cétones, des éthers, des esters, des amides, des urées, des nitriles ou des sulfures ;
v représente un nombre allant de 0,005 à 2,995 ;
w représente un nombre allant de 0,1 à 10 ;
x représente un nombre allant de 0,01 à 10 ;
y représente un nombre allant de 0,001 à 3,0 ;
z représente un nombre allant de 0,001 à 3,0, et m et n sont identiques ou différents et représentent les nombres 1 ou 2.

2. Procédé de préparation des catalyseurs hexacyanocobaltate de zinc/métal suivant la revendication 1, **caractérisé en ce que** l'on fait réagir une solution aqueuse à 1 à 90% en poids d'un sel de zinc de formule Zn(X)ₙ et d'un sel métallique de formule M(Y)ₘ avec une solutuion aqueuse à 0,5 à 50% en poids d'un sel de cyanure de cobalt (III) de formule :
M'₃[Co(CN)₆]ᵣ
où:
r est égal à 1 ou 2, et
M' représente un métal alcalin ou alcalino-terreux ;
en présence de ligands-complexes organiques de formule L, où les sels Zn(X)ₙ, M(Y)ₘ et le sel de cyanure de cobalt (III) sont mis en oeuvre en des quantités telles que le rapport molaire du zinc et du métal M au cobalt (III) se situe dans l'intervalle allant de 2:1 à 10:1, où le ligand complexe L mis en oeuvre est dans desquantités telles que le rapport molaire du zinc et du métal M à L se situe dans l'intervalle allant de 1:100 à 100:1, et où le rapport molaire du sel de zinc Zn(X)ₙ au sel métallique M(Y)ₘ se situe dans l'intervalle allant de 500:1 à 1:500.

3. Utilisation des catalyseurs hexacyanocobaltate de zinc/métal suivant la revendication 1, pour la préparation de polyéther-polyols.
